# EUROPEAN PATENT SPECIFICATION

(11) **EP 2 443 556 B1**
(45) Date of publication and mention of the grant of the patent: **19.02.2014**
(21) Application number: 10726762.7
(22) Date of filing: 17.06.2010
(51) Int. Cl.: G06F 13/16, G06F 13/42

(54) **PARALLEL TRAINING OF DYNAMIC RANDOM ACCESS MEMORY CHANNEL CONTROLLERS**
PARALLELE ANWEISUNG VON DRAM-KANALSTEUERUNGEN
ENTRAÎNEMENT PARALLÈLE DE CONTRÔLEURS DE CANAUX DE MÉMOIRE VIVE DYNAMIQUE

(30) Priority: 17.06.2009 US 486488
(43) Date of publication of application: 25.04.2012
(73) Proprietor: Advanced Micro Devices, Inc., Sunnyvale, CA 94088 (US)
(72) Inventor: HOUSTY, Oswin E., Austin Texas 78749 (US); BAUTISTA, Harold H., Austin Texas 78749 (US)
(74) Representative: Waldren, Robin Michael
(86) International application number: PCT/US2010/039014
(87) International publication number: WO 2010/148213

(56) References cited:
- US-A1- 2008 052 256
- US-A1- 2008 140 919
- US-B1- 7 107 424

## Description

### BACKGROUND

### Technical Field

This invention relates to memory in computer systems and more particularly to efficiently training memory in computer systems.

### Background Art

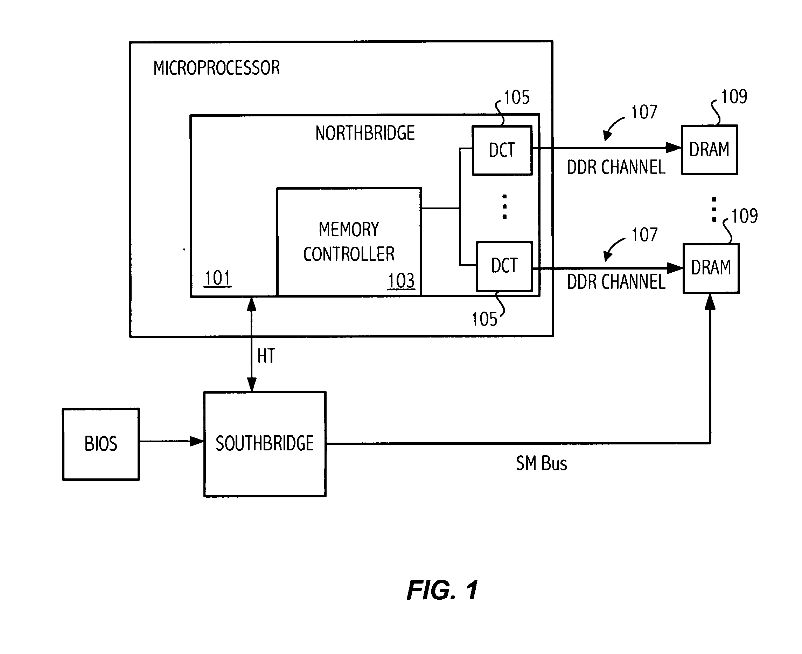

Referring to Fig. 1, in current x86 architectures, the x86 processor's Northbridge 101 contains a memory controller 103 that is coupled to provide high level control of one or more channel controllers 105, each of which interfaces via a communication link 107, e.g., a double data rate (DDR) channel, to a synchronous dynamic random access memory device 109. The channel controller contains circuits that can adjust the delay of the channel controller's transmitter and receiver to ensure that writes from the controller and reads from the DRAM work correctly. That is accomplished by BIOS writing data patterns to and reading the stored data patterns from the DRAM devices over the DDR channel while dynamically setting delays and other training parameters via PCI accesses. This dynamic process is called "DDR training."

During DDR training a channel controller writes a data pattern to memory, and then reads the data back from memory and compares the data read with the write data. If the comparison is successful, then the write and read delays performed satisfactorily. If a miscompare occurs, either or both of the delays were incorrect. After each comparison, a new delay setting is written to the channel controller and the process is repeated until the comparisons are completed. Note that more than one delay setting may work. The training identifies the successful delay settings and picks the particular setting with the most margin, e.g., in the middle of the "eye." Thus, for each read delay, multiple write delays are tested and for each write delay, multiple read delays may be utilized until satisfactory results are obtained. That process is repeated in a serial manner for each channel controller in the system, i.e., only one channel controller is trained at a time.

The use of increasing amounts of memory in computer systems is adding to the training time burden. In addition, other parameters besides read delays and write delays are being utilized, or will soon be utilized, such as reference voltage on the receivers to determine a 1 or 0. As more channel controllers are trained for additional parameters, additional delay is incurred. The numerous PCI accesses from the memory controller to each channel controller necessary to train each DDR channel further increases the training time. For each PCI access to a channel controller, BIOS software is required to poll on a completion bit to indicate that the previous access to the channel controller is complete and the channel controller is ready for another read/write access. Each delay setting written to the channel controllers or read from the channel controllers is set or read by polling on the completion bit.

US-A-2008/052256 discloses a method of training connections in a memory arrangement. US-A- 2008/140919 discloses a multi-channel storage system.

### DISCLOSURE OF INVENTION

Accordingly, in order to reduce training time and therefore boot time in computer systems, multiple memory channels are trained simultaneously. The training includes the transmitter and receivers in the channel controllers and the transmitter and receivers in the memory devices themselves to the extent they are configurable.

In one embodiment, a method is provided that includes sending a communication relating to memory training to a memory controller synchronizer. The memory controller synchronizer sends training parameters to a plurality of channel controllers coupled to the memory controller synchronizer to set the training parameters in the plurality of channel controllers. The channel controllers write training data in parallel from respective channel controllers to respective memory devices coupled to the channel controllers via respective communication channels. The written training data is read from respective memory devices into respective ones of the channel controllers in parallel and the data read by each channel controller is compared to the data sent to the memory devices by each controller to determine if one or more training parameters for use on a particular channel is acceptable.

The method may further comprise storing the data read from the memory devices in respective first storage locations in the respective channel controllers; and storing data to be written to the memories in respective second storage locations in respective channel controllers.

In an embodiment, the training parameters include one or more of a write delay, a read delay, and a voltage setting. The training parameters may be the same for each channel controller.

The method may include controlling multiple ones of the channel controllers from a single core of a multi-core device.

In another embodiment, an apparatus is provided that includes a training synchronizer coupled to receive training information via a communication link. The training synchronizer includes a plurality of communication interfaces operable to simultaneously communicate over the communication interfaces with a plurality of memory channel controllers that are responsive to one or more communications from the training synchronizer, including at least some of the training information, to simultaneously train a respective plurality of memory channels coupled to respective ones of the memory channel controllers.

The apparatus may further comprise respective first storage locations associated with respective ones of the memory controllers for storing data patterns to be written to memory devices via the memory channels; and respective second storage locations associated with respective ones of the memory channel controllers for storing data patterns read from the memory devices via the memory channels.

The apparatus may further comprise compare logic in each of the memory channel controllers to compare the data patterns written and the data patterns read in each of the channel controllers.

In an embodiment, the training synchronizer is operable to compare the data patterns written and the data patterns read by each of the memory channel controllers.

In an embodiment, the training synchronizer is coupled via a plurality of communication paths to provide delay values to each of the memory channel controllers simultaneously.

In an embodiment, the training information includes data patterns and delay values.

### BRIEF DESCRIPTION OF DRAWINGS

The present invention may be better understood, and its numerous objects, features, and advantages made apparent to those skilled in the art by referencing the accompanying drawings.
Fig. 1 illustrates a prior art computer system.
Fig. 2 illustrates a computer system according to an embodiment of the invention.
Fig. 3 illustrates additional details of a training synchronizer.
Fig. 4 illustrates a block diagram of a system according to an embodiment of the invention.
Fig. 5 illustrates a write operation according to an embodiment of the invention.
Fig. 6 illustrates a read operation according to an embodiment of the invention.
Fig. 7 illustrates a flow diagram illustrating an embodiment of the invention.

The use of the same reference symbols in different drawings indicates similar or identical items.

### MODE(S) FOR CARRYING OUT THE INVENTION

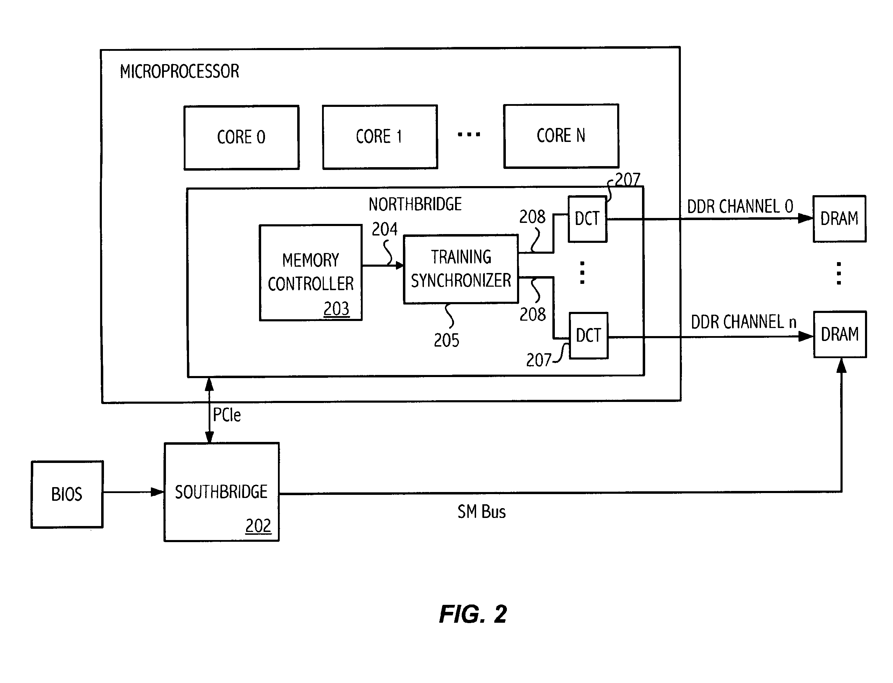

One problem with serial training of DDR devices is that it increases the boot time of a computer system. With reference to Fig. 2, which illustrates a portion of a computer system according to an embodiment of the invention, training of the DDR channels occurs as a part of system initialization during system boot time. The training occurs in parallel instead of serially as in prior art approaches. BIOS software, typically stored in non-volatile memory (NVM), is used to train the DDR memory system. The Southbridge 202 retrieves the Serial Presence Detect (SPD) from the memory devices, which indicates which devices are present and therefore which channel controllers need training. Execution of the BIOS software causes the memory controller 203, which is part of the Northbridge, to begin communicating with the training synchronizer 205. The memory controller 203 provides high level control functionality for training synchronizer 205. The communications include sending a data pattern to the training synchronizer 205. The data patterns are stored in buffers in the training synchronizer 205. The memory controller 203 also supplies the training synchronizer information as to which DRAM controllers (DCT) 207 need to be trained. The communications from the memory controller 203 may take place over an internal PCI bus 204 or other internal communications link. However, rather than the memory controller having to communicate with each DCT separately for serial training of each DCT, the communications with the training synchronizer can include information such as data patterns for all DCTs in the system. In addition to the data patterns and the indication of which DCTs need training, the training synchronizer also needs to be told the values of the channel training parameters to use (e.g., read and write delays, reference voltage(s), and all other parameters required for training).

In an embodiment, the training synchronizer will be given the same channel training parameters for all the DCTs. The training synchronizer provides both the channel training parameters and the data patterns to the DCTs 207 over independent communication paths 208. Additionally, because the paths are independent, the training synchronizer can also receive unique training parameters from the memory controller 203 for each DCT and simultaneously supply the unique training parameters to the channel controllers 207.

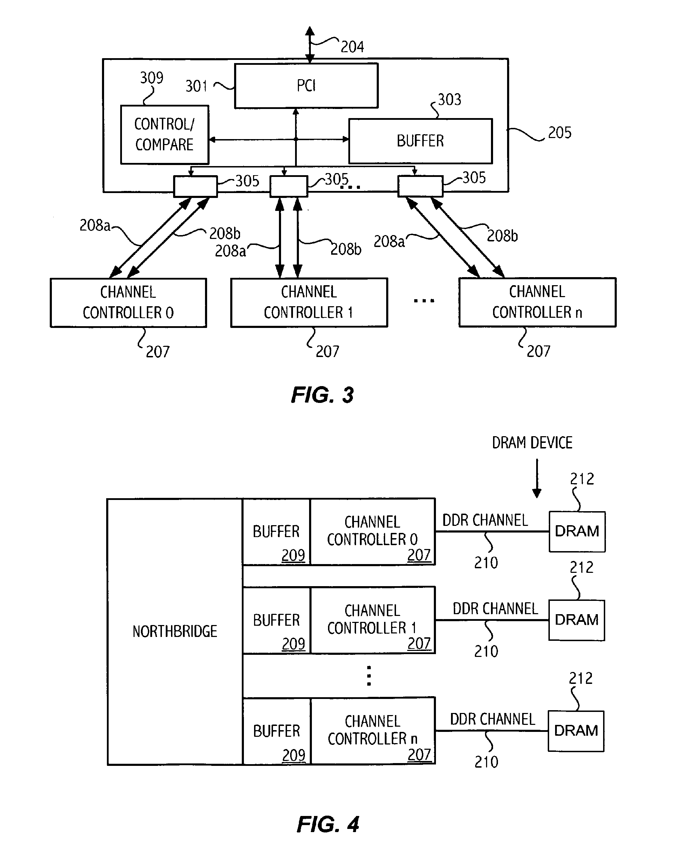

Fig. 3 illustrates a block diagram of an embodiment of a training synchronizer. A PCI interface 301 communicates with the memory controller. A buffer 303 stores training data such as data patterns and channel parameters for the DCTs. The control logic 309 controls the functionality described herein with respect to the training synchronizer. The control logic may be implemented conventionally using state machines and/or other control structures known in the art such as microcontrollers. The training information may be sent in one or more blocks over the PCI bus 204 and include one or more training patterns for each channel controller and appropriate channel training parameters for each channel controller. In some embodiments, the training patterns and channel training parameters are identical for each channel controller making the use of the training synchronizer particularly advantageous as compared to serial communications with each channel controller. Interfaces 305 communicate with the channel controllers 207 independently and can communicate simultaneously. In an embodiment, the appropriate channel framing parameters are sent to each channel controller in one or more blocks over a PCI bus 208a. One or more training patterns and commands are sent to each controller over the Data/CMD bus 208b. In an embodiment, the training synchronizer supplies the channel controllers with the data patterns simultaneously. In an embodiment, the training synchronizer simultaneously supplies the channel controllers with their training parameters, identical or unique, for efficiency during boot time. After the data is written by the channel controllers, the control logic (309) issues a read command via Data/CMD bus 208b to the channel controllers to retrieve data from the channels. The channel controllers 207 provide the data to the control logic 309 via Data/CMD bus 208b simultaneously in one embodiment. For each channel controller 207, the control logic 309 compares the data read with the data written. Depending on the result of the comparison, additional channel timing parameters will be sent to each channel controller in one or more blocks over the PCI bus 208a.

Referring now to Figs. 2 and 4, each controller 207 has an associated write buffer 209 that stores data patterns to write to the DRAMs over the DDR channel. The channel controllers are supplied the appropriate training parameter values and the data patterns to write by the training synchronizer. The data patterns are stored in the write data buffers 209. As stated above, the data patterns may be common to all the channel controllers, or different data patterns may be supplied to one or more of the channel controllers.

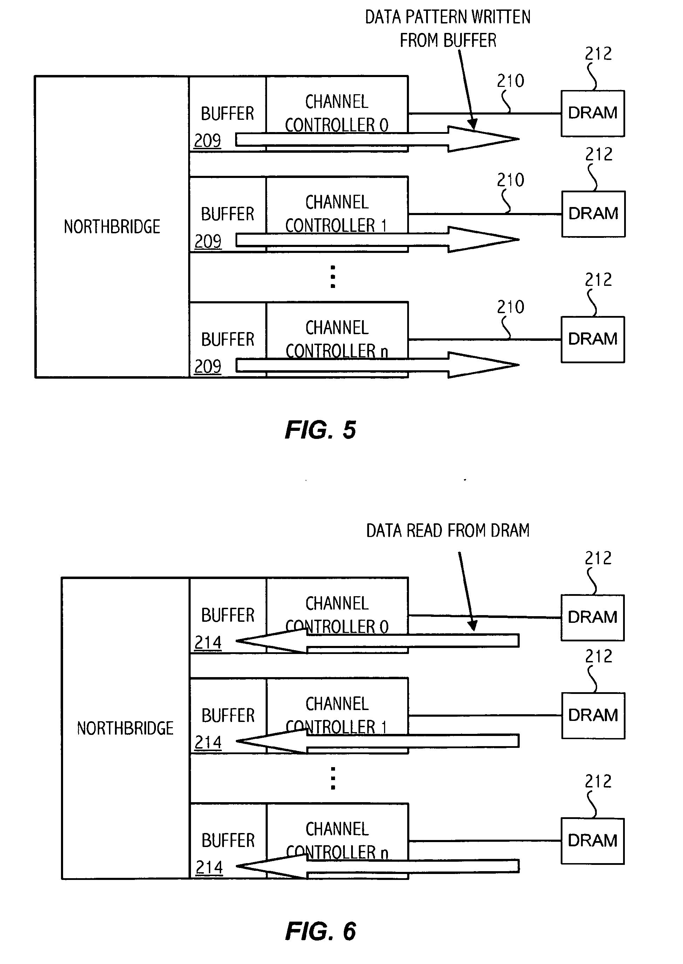

Referring to Fig. 5, the channel controllers simultaneously write their data patterns stored in write buffers 209 over the DDR channels 210 to the DRAM devices 212 with the training parameters specified by the training synchronizer 205. Referring to Fig. 6, the controllers simultaneously read into read buffers 214 the data patterns that have been written into the memory devices. The read data is compared to the write data to determine if the training parameters used were satisfactory. In an embodiment, the compare logic to perform the comparison is located in the channel controller, e.g., as part of control/compare logic 309. Increased capability in each channel controller provides for faster training by multiple channel controllers. The tradeoff for increased training speed is increased logic in each of the channel controllers.

After a particular write/read/comparison is completed, each channel controller may continue training with new training parameters. The channel controllers provide the result of each write/read/comparison to the training synchronizer and new training parameters are supplied to the channel controllers for a next read/write/compare cycle for those channel controllers that need to continue training. Once the training is completed, the parameters for each channel are set according to the training results.

In an embodiment, after a particular write/read/comparison is completed, each channel controller continues training with new training parameters already provided by the training synchronizer, either as a list or as a beginning value, ending value, and increment, and the channel controller cycles through all the training parameters on its own. After the channel training is complete, the training synchronizer is notified by each of the channel controllers. The channel controllers may set the optimum training parameters themselves, i.e., those values of the parameters that provide the best margin or based on other appropriate criteria.

In other embodiments, the successful training parameters or the results of the comparisons of the read and write data are supplied back to the training synchronizer after each write/read/compare cycle, and the training synchronizer, the memory controller, or software makes the determination of which training parameter values to use as the final or trained parameter value. The determination of which of the training parameters to use is typically done in software.

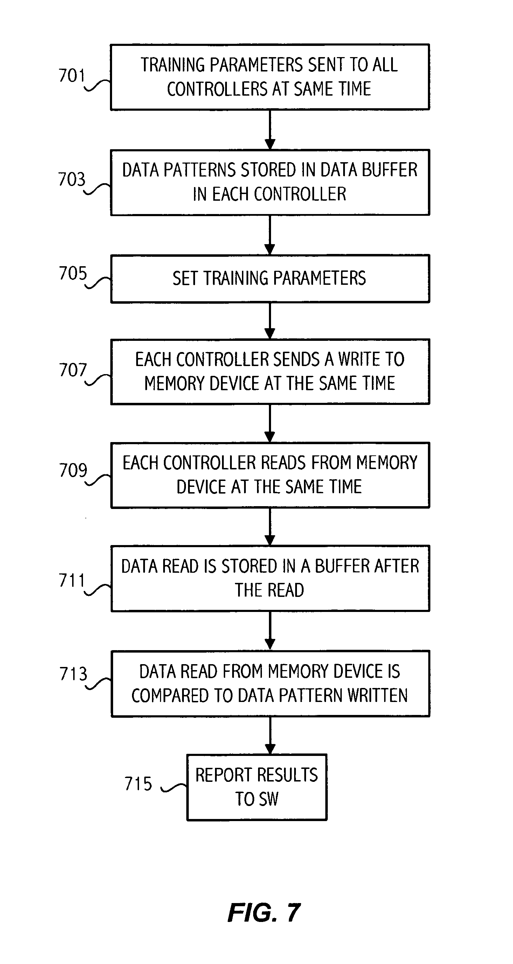

Referring to Fig. 7, a flow diagram illustrates operation of an embodiment of the invention. In 701, the training parameters, such as delay values, are sent to all the channel controllers by the delay synchronizer. In an embodiment, the training parameters are sent at the same time. In other embodiments, the training synchronizer sends the delay values serially to each channel controller. Even though the delays are sent serially, the amount of data transferred is small and the communication overhead is low. In 703, data patterns are stored in the write data buffer in each channel controller. The data patterns may be provided simultaneously to all the channel controllers. In 705, the channel controllers set their training parameters. Once the training parameters are set, the channel controllers begin their training either responsive to one or more control signals or commands from the training synchronizer or responsive to having had the training data patterns and training parameters supplied. In 707, the channel controllers simultaneously write to the memory devices. In 709, the channel controllers read from the memory devices simultaneously and in 711, channel controllers store the data that is read in a read buffer. In 713, the read data is compared to the write data. Note that rather than compare the data itself, a hash value may be generated for the written and read data and that value may be compared in the channel controllers, the synchronizer or in software. If the read data equals the write data, then a valid set of training parameters, e.g., read and write delays, has been found. If not, then the training parameters failed. The results are reported back to software in 715, which then determines, given the success or failure information, whether additional sweeps are necessary, and if so, then the steps 701-715 may be repeated again.

Thus, various embodiments have been described to efficiently train multiple DDR channels simultaneously. Note that the description of the invention set forth herein is illustrative, and is not intended to limit the scope of the invention as set forth in the following claims. For example, while SDRAMs and DDR channels were described, the approach is applicable to any sort of memory device and communication channel coupling the memory device to the controller where training is required. Variations and modifications of the embodiments disclosed herein may be made based on the description set forth herein, without departing from the scope of the invention as set forth in the following claims.

## Claims

1. A method comprising:
sending a communication relating to memory training to a memory controller synchronizer (205);
sending training parameters to a plurality of channel controllers (207) coupled to the memory controller synchronizer;
setting the training parameters in the plurality of channel controllers;
writing training data in parallel from respective channel controllers to respective memory devices (212) coupled to the channel controllers via respective communication channels (210);
reading the written training data from respective memory devices into respective ones of the channel controllers in parallel; and
comparing the data read by each channel controller to the data sent to the memory devices by each controller to determine if one or more training parameters for use on a particular channel is acceptable.

2. The method as recited in claim 1 further comprising:
storing data to be written to the memories in respective first storage locations in respective channel controllers; and
storing the data read from the memory devices in respective second storage locations in the respective channel controllers.

3. The method as recited in any of claims 1 to 2 wherein the training parameters includes one or more of a write delay, a read delay, and a voltage setting.

4. The method as recited in claim 1 wherein the training parameters are the same for each channel controller.

5. The method as recited in claim 1 further comprising controlling multiple ones of the channel controllers from a single core of a multi-core device.

6. An apparatus comprising:
a training synchronizer (205) coupled to receive training information via a communication link, the training synchronizer including a plurality of communication interfaces (305) and operable to simultaneously communicate over the communication interfaces;
a plurality of memory channel controllers (207) coupled to respective ones of the communication interfaces of the training synchronizer and responsive to one or more communications from the training synchronizer, including at least some of the training information, to simultaneously train a respective plurality of memory channels (210) coupled to respective ones of the memory channel controllers.

7. The apparatus as recited in claim 6 further comprising:
respective first storage locations associated with respective ones of the memory controllers for storing data patterns to be written to memory devices (212) via the memory channels; and
respective second storage locations associated with respective ones of the memory channel controllers for storing data patterns read from the memory devices via the memory channels.

8. The apparatus as recited in any of claims 6 to 7 further comprising compare logic in each of the memory channel controllers to compare the data patterns written and the data patterns read in each of the channel controllers.

9. The apparatus as recited in claims any of 6 to 7 wherein the training synchronizer is operable to compare the data patterns written and the data patterns read by each of the memory channel controllers.

10. The apparatus as recited in any of claims 6 to 7 wherein the training synchronizer is coupled via a plurality of communication paths to provide delay values to each of the memory channel controllers simultaneously.

11. The apparatus as recited in any of claims 6 to 7 wherein the training information includes data patterns and delay values.

## Patentansprüche

1. Verfahren, umfassend:
Senden einer Kommunikation mit Bezug auf eine Speicheranweisung an eine Speichersteuerungs-Synchronisiervorrichtung (205);
Senden von Anweisungsparametern an eine Vielzahl von Kanalsteuerungen (207), die an die Speichersteuerungs-Synchronisiervorrichtung gekoppelt sind;
Einstellen der Anweisungsparameter in der Vielzahl von Kanalsteuerungen;
paralleles Schreiben von Anweisungsdaten von entsprechenden Kanalsteuerungen in entsprechende Speichervorrichtungen (212), die über entsprechende Kommunikationskanäle (210) an die Kanalsteuerungen gekoppelt sind,
paralleles Lesen der geschriebenen Anweisungsdaten von entsprechenden Speichervorrichtungen in entsprechende Speichervorrichtungen der Kanalsteuerungen; und
Vergleichen der von jeder Kanalsteuerung gelesenen Daten mit den von jeder Steuerung an die Speichervorrichtungen geschickten Daten, um zu bestimmen, ob ein oder mehrere Anweisungsparameter für die Verwendung in einem bestimmten Kanal akzeptierbar ist/sind.

2. Verfahren nach Anspruch 1, weiter umfassend:
Speichern von Daten, die in die Speicher geschrieben werden sollen, in entsprechende erste Speicherstellen in entsprechenden Kanalsteuerungen; und
Speichern der Daten, die von den Speichervorrichtungen gelesen wurden, in entsprechende zweite Speicherstellen in den entsprechenden Kanalsteuerungen.

3. Verfahren nach einem der Ansprüche 1 bis 2, wobei die Anweisungsparameter eines oder mehrere einer Schreibverzögerung, einer Leseverzögerung und einer Spannungseinstellung umfassen.

4. Verfahren nach Anspruch 1, wobei die Anweisungsparameter die gleichen für jede Kanalsteuerung sind.

5. Verfahren nach Anspruch 1, weiter umfassend das Steuern zahlreicher Kanalsteuerungen von einem einzigen Kern einer Mehrfachkernvorrichtung.

6. Gerät, umfassend:
eine Anweisungs-Synchronisiervorrichtung (205), die gekoppelt ist, um Anweisungsinformation über eine Kommunikationsverbindung zu erhalten, wobei die Anweisungs-Synchronisiervorrichtung eine Vielzahl von Kommunikationsschnittstellen (305) umfasst und betriebsbereit ist, um gleichzeitig über die Kommunikationsschnittstellen zu kommunizieren,
eine Vielzahl von Speicherkanalsteuerungen (207), die mit entsprechenden Kommunikationsschnittstellen der Anweisungs-Synchronisiervorrichtung gekoppelt ist, und empfänglich ist für eine oder mehrere Kommunikationen von der Anweisungs-Synchronisiervorrichtung, darin eingeschlossen mindestens einige der Anweisungsinformationen, um gleichzeitig eine entsprechende Vielzahl von Speicherkanälen (210) anzuweisen, die an entsprechende Speicherkanalsteuerungen gekoppelt ist.

7. Gerät nach Anspruch 6, weiter umfassend:
entsprechende erste Speicherstellen, die mit entsprechenden Speichersteuerungen assoziiert sind, um Datenmuster zu speichern, die über die Speicherkanäle in die Speichervorrichtungen (212) geschrieben werden sollen; und
entsprechende zweite Speicherstellen, die mit entsprechenden Speicherkanalsteuerungen assoziiert sind, um Datenmuster zu speichern, die über die Speicherkanäle von den Speichervorrichtungen gelesen wurden.

8. Gerät nach einem der Ansprüche 6 bis 7, weiter umfassend eine Vergleichslogik in jeder der Speicherkanalsteuerungen, um die in jeder der Kanalsteuerungen geschriebenen Datenmuster und gelesenen Datenmuster zu vergleichen.

9. Gerät nach einem der Ansprüche 6 bis 7, wobei die Anweisungs-Synchronisiervorrichtung betriebsbereit ist, um die durch jede der Speicherkanalsteuerungen geschriebenen Datenmuster und gelesenen Datenmuster zu vergleichen.

10. Gerät nach einem der Ansprüche 6 bis 7, wobei die Anweisungs-Synchronisiervorrichtung über eine Vielzahl von Kommunikationswegen gekoppelt ist, um Verzögerungswerte gleichzeitig an jede der Speicherkanalsteuerungen bereitzustellen.

11. Gerät nach einem der Ansprüche 6 bis 7, wobei die Anweisungsinformation Datenmuster und Verzögerungswerte umfasst.

## Revendications

1. Procédé consistant à :
envoyer une communication connexe à une attribution de mémoire à un synchroniseur de contrôleurs de mémoire (205) ;
envoyer des paramètres d'attribution à une pluralité de contrôleurs de canaux (207) couplés au synchroniseur de contrôleurs de mémoire ;
régler les paramètres d'attribution dans la pluralité de contrôleurs de canaux ;
écrire des données d'attribution en parallèle provenant de contrôleurs de canaux respectifs sur des dispositifs de mémoire respectifs (212) couplés aux contrôleurs de canaux par l'intermédiaire de canaux de communication respectifs (210) ;
lire les données d'attribution écrites à partir de dispositifs de mémoire respectifs dans des contrôleurs respectifs des contrôleurs de canaux en parallèle ; et
comparer les données lues par chaque contrôleur de canaux aux données envoyées aux dispositifs de mémoire par chaque contrôleur, en vue de déterminer si un ou plusieurs paramètres d'attribution à utiliser sur un canal particulier est/sont acceptables.

2. Procédé selon la revendication 1, consistant en outre à :
stocker des données, à écrire dans les mémoires, dans des premiers emplacements de stockage respectifs au sein de contrôleurs de canaux respectifs ; et
stocker les données lues à partir des dispositifs de mémoire dans des seconds emplacements de stockage respectifs au sein des contrôleurs de canaux respectifs.

3. Procédé selon l'une quelconque des revendications 1 à 2, dans lequel les paramètres d'attribution incluent un ou plusieurs des éléments parmi un retard d'écriture, un retard de lecture, et un réglage de tension.

4. Procédé selon la revendication 1, dans lequel les paramètres d'attribution sont les mêmes pour chaque contrôleur de canaux.

5. Procédé selon la revendication 1, consistant en outre à commander plusieurs contrôleurs parmi les contrôleurs de canaux à partir d'un coeur unique d'un dispositif multicoeur.

6. Appareil comprenant :
un synchroniseur d'attribution (205) couplé de manière à recevoir des informations d'attribution par l'intermédiaire d'une liaison de communication, le synchroniseur d'attribution comprenant une pluralité d'interfaces de communication (305) et étant exploitable de manière à communiquer simultanément sur les interfaces de communication ;
une pluralité de contrôleurs de canaux de mémoire (207) couplés à des interfaces respectives parmi les interfaces de communication du synchroniseur d'attribution, et répondant à une ou plusieurs communications en provenance du synchroniseur d'attribution, incluant au moins certaines des informations d'attribution, en vue d'attribuer simultanément une pluralité respective de canaux de mémoire (210) couplés à des contrôleurs respectifs parmi les contrôleurs de canaux de mémoire.

7. Appareil selon la revendication 6, comprenant en outre :
des premiers emplacements de stockage respectifs associés à des contrôleurs respectifs parmi les contrôleurs de mémoire en vue de stocker des motifs de données à écrire sur des dispositifs de mémoire (212) par l'intermédiaire des canaux de mémoire ; et
des seconds emplacements de stockage respectifs associés à des contrôleurs respectifs parmi les contrôleurs de canaux de mémoire en vue de stocker des motifs de données lus à partir des dispositifs de mémoire par l'intermédiaire des canaux de mémoire.

8. Appareil selon l'une quelconque des revendications 6 à 7, comprenant en outre une logique de comparaison dans chacun des contrôleurs de canaux de mémoire, en vue de comparer les motifs de données écrits et les motifs de données lus dans chacun des contrôleurs de canaux.

9. Appareil selon l'une quelconque des revendications 6 à 7, dans lequel le synchroniseur d'attribution est exploitable de manière à comparer les motifs de données écrits et les motifs de données lus par chacun des contrôleurs de canaux de mémoire.

10. Appareil selon l'une quelconque des revendications 6 à 7, dans lequel le synchroniseur d'attribution est couplé par l'intermédiaire d'une pluralité de chemins de communication en vue de fournir des valeurs de retard à chacun des contrôleurs de canaux de mémoire simultanément.

11. Appareil selon l'une quelconque des revendications 6 à 7, dans lequel les informations d'attribution comportent des motifs de données et des valeurs de retard.
